# EUROPÄISCHE PATENTSCHRIFT

(11) **EP 2 994 365 B1**
(45) Veröffentlichungstag und Bekanntmachung des Hinweises auf die Patenterteilung: **28.02.2018**
(21) Anmeldenummer: 14718405.5
(22) Anmeldetag: 17.04.2014
(51) Int. Cl.: B62D 21/15, B60R 21/02, F02B 67/06, F16H 55/17, B29C 67/00, B22F 5/08, B22F 3/105, F16H 55/36, B22F 5/00, B60R 21/00, F16F 7/12

(54) **FAHRZEUG, MIT EINEM VERBRENNUNGSMOTOR, WELCHER EINEN ZUGMITTELTRIEB AUFWEIST**
VEHICLE, WITH AN INTERNAL COMBUSTION ENGINE HAVING A TRACTION MECHANISM DRIVE
VEHICULE, AVEC UN MOTEUR À COMBUSTION INTERNE AYANT UNE TRANSMISSION À MOYEN DE TRACTION

(30) Priorität: 07.05.2013 DE 102013208327
(43) Veröffentlichungstag der Anmeldung: 16.03.2016
(73) Patentinhaber: Bayerische Motoren Werke Aktiengesellschaft, 80809 München (DE)
(72) Erfinder: HOISS, Franz, 82347 Bernried (DE); ZIMMERMANN, Markus, 81541 München (DE)
(86) Internationale Anmeldenummer: PCT/EP2014/057845
(87) Internationale Veröffentlichungsnummer: WO 2014/180643

(56) Entgegenhaltungen:
- DE-A1- 2 457 400
- DE-A1- 2 655 909
- DE-A1- 2 708 567
- DE-A1- 19 939 813
- DE-B3-102007 048 385
- US-A- 4 109 367
- US-A- 4 309 970

## Beschreibung

Die vorliegende Erfindung betrifft ein Fahrzeug gemäß dem Oberbegriff des Patentanspruchs 1.

Ein derartiges Fahrzeug ist aus der US 4 309 970 A bekannt.

Aus der DE 199 39 813 A1 ist ein Verbrennungsmotor mit einer Kurbelwelle und einem an eine Stirnseite der Kurbelwelle angeschraubten Treibrad eines Nebenantriebs bekannt.

Zum technischen Hintergrund der Erfindung zählen die DE 10 2007 048 385 B3, DE 26 55 909 A1, US 4 109 367 A, DE 27 09 567 A sowie die DE 24 57 400 A1.

Fahrzeuge mit längs eingebautem Verbrennungsmotor, d. h. mit einem Verbrennungsmotor, dessen Kurbelwelle sich in einer Längsrichtung des Fahrzeugs erstreckt, weisen vorderhalb des Verbrennungsmotors einen Zugmitteltrieb, der üblicherweise als Riementrieb ausgebildet ist, auf. Der Riementrieb wird von einer Riemenscheibe angetrieben, die wiederum von der Kurbelwelle des Verbrennungsmotors angetrieben wird.

Aus Designgründen ist man bestrebt, den "Überhang" des Fahrzeugvorderbaus, d. h. den Abstand zwischen den Vorderrädern und dem vordersten Punkt des Fahrzeugs, möglichst kurz zu halten. Diese Designanforderung steht in einem gewissen Zielkonflikt zu dem unter dem Gesichtspunkt der Crashauslegung geforderten "Deformationsweg", der möglichst lang sein sollte. Bei einem Frontalcrash, bei dem der Vorderbau gestaucht wird, geht die Riemenscheibe über üblicherweise "auf Block" mit dem Motorblock des Verbrennungsmotors.

Aufgabe der Erfindung ist es, ein Fahrzeug, mit einem Verbrennungsmotor und einem Zugmittelbtrieb zu schaffen, das auch bei einem vergleichsweise kurzen Überhang einen hinreichend großen Deformationsweg aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug mit einem Verbrennungsmotor, der so in das Fahrzeug eingebaut ist, dass sich eine Kurbelwelle des Verbrennungsmotors in einer Längsrichtung des Fahrzeugs erstreckt.

Der Verbrennungsmotor weist einen Zugmitteltrieb, welcher ein um eine Längsachse des Fahrzeugs drehbar angeordnetes (Antriebs-)Rad, insbesondere eine Riemenscheibe, aufweist. Das Rad bzw. die Riemenscheibe ist, in Fahrtrichtung des Fahrzeugs betrachtet, vorderhalb des Verbrennungsmotors angeordnet. Mittels eines derartigen Zugmitteltriebs werden Nebenaggregate des Verbrennungsmotors, wie z. B. ein Generator (Lichtmaschine) bzw. ein mechanisch angetriebener Kältemittelverdichter angetrieben.

Der Kern der Erfindung besteht darin, dass das Rad des Zugmitteltriebs mindestens eine "Schwächung" aufweist, die dazu vorgesehen ist, bei einem Crash eine Stauchung bzw. Komprimierung des Rads (bzw. der RiemenScheibe) zu erleichtern, so dass das Rad bzw. die Riemenscheibe einen Teilabschnitt des Deformationswegs des Vorderbaus bildet.

Durch die mindestens eine Schwächung wird also sichergestellt, dass bei einem Frontalcrash des Fahrzeugs eine Kompression des Rads in Längsrichtung des Fahrzeugs ermöglicht bzw. erleichtert wird. Im Unterschied zu herkömmlichen Riemenscheiben, die bei einem Crash als nahezu inkompressibler bzw. kaum kompressibler "Block" wirken, kann das Rad gemäß der Erfindung zumindest um einige Millimeter bzw. um einige Zentimeter zusammengestaucht werden, wodurch sich der "Deformationsweg" des Fahrzeugvorderbaus entsprechend verlängert.

Das Rad des Zugmitteltriebs kann z. B. durch Lasersintern hergestellt sein. Es kann sich also um ein lasergesintertes Bauteil handeln. Lasergesinterte Bauteile können hinsichtlich ihrer Geometrie nahezu beliebig komplex gestaltet und mit Ausnehmungen, Hinterschnitten o.ä. versehen sein. Lasergesinterte Bauteile bieten vielfältige Möglichkeiten, Schwächungen darzustellen. Das Rad muss aber nicht zwingend ein Lasersinterteil sein. Es kann sich auch um ein Gußteil oder um ein gedrehtes Teil handeln.

Gemäß der Erfindung sind in dem Rad in Umfangsrichtung voneinander beabstandete Schwächungen vorgesehen, die durch Schlitze gebildet sind. Die Schlitze können z. B. die Form von Rechtecken haben. Dabei kann vorgesehen sein, dass die sich in Längsrichtung des Fahrzeugs erstreckende Länge der Schlitze größer ist als die sich in Umfangsrichtung des Rads erstreckende Schlitzbreite.

Nach einer Weiterbildung der Erfindung ist das Rad an einer Schwungscheibe des Verbrennungsmotors befestigt. Das Rad kann z. B. an der Schwungscheibe angeschraubt sein.

Desweiteren kann vorgesehen sein, dass die Schwungscheibe eine nutartige Vertiefung aufweist, die z. B. die Form eines Vollkreises haben kann. Durch eine nutartige Vertiefung kann ein weiterer Deformationsweg von einigen Millimetern vorgehalten werden. Bei einem Frontalcrash kann die Stirnseite des Radumfangs in die Nut hinein ausweichen bzw. in sich in die Nut hinein verformen.

Alternativ oder ergänzend dazu kann ein "Spaltelement" vorgesehen sein. Unter einem "Spaltelement" wird ein Element verstanden, welches bei einem Frontalcrash des Fahrzeugs den Umfang des Rads in Längsrichtung des Fahrzeugs an mindestens einer Stelle oder an mehreren Stellen spaltet.

Das Spaltelement kann, in einer Seitenansicht der Riemenscheibe betrachtet, "pilzartig" gestaltet sein. Ein "Schaftabschnitt" des Spaltelements kann konzentrisch in Bezug auf die Drehachse des Rads angeordnet sein. Das Spaltelement weist ferner einen "Kopfabschnitt" auf. An einer dem Rad zugewandten Unterseite des Kopfabschnitts des Spaltelements kann mindestens ein schneidenartiges Element vorgesehen sein, das bei einem Frontalcrash in den Umfangsabschnitt des Rads eindringt und diesen spaltet. Vorzugsweise können in Umfangsrichtung verteilt mehrere derartige schneidenartige Elemente angeordnet sein. Beispielsweise können vier jeweils um 90° in Umfangsrichtung voneinander beabstandete schneidenartige Elemente vorgesehen sein.

Im Folgenden wird die Erfindung im Zusammenhang mit der Zeichnung näher erläutert. Es zeigen:
- Figur 1: eine Riemenscheibe gemäß dem Stand der Technik;
- Figur 2: eine an ein Schwungrad angeschraubte Riemenscheibe, wobei an dem Schwungrad eine nutartige Vertiefung vorgesehen ist;
- Figur 3: die Riemenscheibe der Figur 2 im Crashfall;
- Figur 4: eine Riemenscheibe mit axialen Schlitzungen;
- Figur 5: eine lasergesinterte Riemenscheibe; und
- Figur 6: eine Riemenscheibe mit einem Spaltelement.

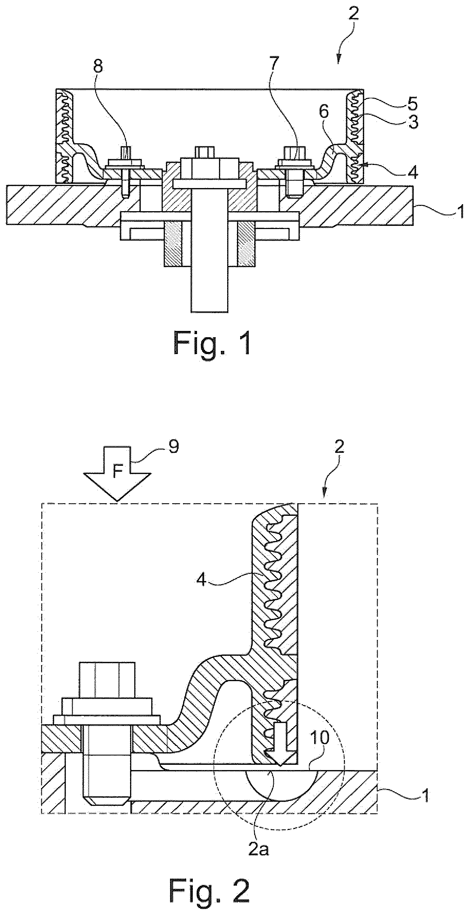

Figur 1 zeigt eine herkömmliche Riemenscheibe 1 eines Nebenaggregateantriebs eines Verbrennungsmotors mit einer von der Kurbelwelle des Verbrennungsmotors angetriebenen Schwungscheibe 1, an die eine Riemenscheibe 2 angeschraubt ist. Die Riemenscheibe 2 weist eine mit einer Profilierung 3 versehene Umfangs- bzw. Mantelfläche 4 auf, auf die ein Riemen 5 eines hier nicht näher dargestellten Nebenaggregateantriebs aufgezogen ist. Eine mit der Umfangs- bzw. Mantelfläche 4 verbundene Basis 6 ist über Schrauben 7, 8 mit der Schwungscheibe 1 verschraubt.

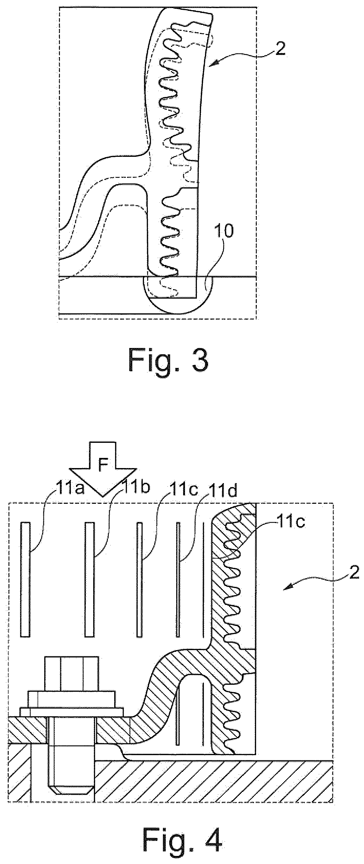

Bei einem Frontalcrash des Fahrzeugs wird die Riemenscheibe 2 in Fahrzeuglängsrichtung gestaucht, was in Figur 2 durch einen Pfeil 9 dargestellt ist. Um einen möglichst großen Deformationsweg zu erreichen, ist bei dem in Figur 2 gezeigten Ausführungsbeispiel in der Schwungscheibe 1 eine halbkreisförmige, nutartige Vertiefung 10 vorgesehen, die sich über einen vollen Kreis in der Schwungscheibe 1 erstreckt. Bei einer Deformierung der Riemenscheibe 2 kann eine Stirnseite 2a der Riemenscheibe 2 sich in die nutartige Vertiefung 10 hinein verformen, was in Figur 3 dargestellt ist. Die Tiefe der nutartigen Vertiefung 10 stellt somit einen zusätzlich Deformationsweg dar.

Eine Deformierung der Riemenscheibe 2 kann zusätzlich durch in der Riemenscheibe 2 vorgesehene Schlitze 11a - 11e unterstützt werden. Wie aus Figur 4 ersichtlich ist, erstrecken sich die Schlitze 11a -11e in Fahrzeuglängsrichtung bzw. parallel zur Drehachse der Riemenscheibe 2. Die Schlitze 11a - 11e sind in Umfangsrichtung der Riemenscheibe 2 voneinander beabstandet angeordnet.

Selbstverständlich können die Schlitze 11a - 11e mit einer in der Schwungscheibe 1 vorgesehen nutartigen Vertiefung 10 kombiniert werden, wodurch sich ein insgesamt noch höherer Deformationsweg erreichen lässt.

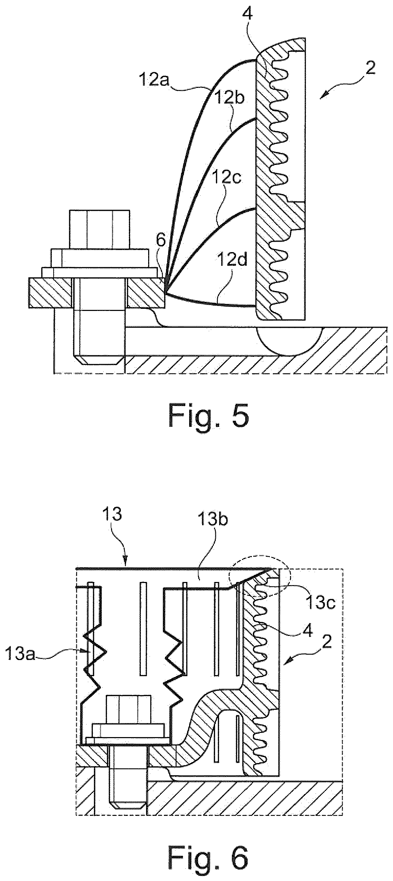

Figur 5 zeigt ein Ausführungsbeispiel einer Riemenscheibe 2, die eine sehr komplexe Geometrie aufweist, mit einer Umfangs- bzw. Mantelfläche 4, die über mehrere Stege 12a, 12b, 12c, 12c mit der Basis 6 der Riemenschiebe verbunden ist. Eine derart komplexe Riemenscheibengeometrie kann z. B. durch Lasersintern dargestellt werden. Die Riemenscheibe 2 kann z. B. aus einem Metallpulver oder aus einem metallhaltigen Pulver gesintert werden.

Figur 6 zeigt ein Ausführungsbeispiel, bei dem zusätzlich zur Riemenscheibe 2 ein pilzförmiges Spaltelement 13 vorgesehen ist. Das Spaltelement 13 weist einen Schaftabschnitt 13a und einen Kopfabschnitt 13b auf. Der gezackt dargestellte Schaftabschnitt 13a ist in Längsrichtung des Fahrzeugs, d. h. in Drehrichtung der Riemenscheibe 2 betrachtet relativ weich gestaltet. Bei einem Frontalcrash des Fahrzeugs kann der Schaftabschnitt 13a somit relativ leicht gestaucht werden. Der Kopfabschnitt 13b weist z.B. vier in Umfangsrichtung um 90° voneinander beabstandete schneidenartige Elemente 13c auf. Wird das Spaltelement 13 bei einem Frontalcrash gestaucht, so dringen die schneidenartigen Elemente 13c in den Umfangs-bzw. Mantelabschnitt 4 der Riemenscheibe ein und spalten diese. Dadurch wird eine Stauchung bzw. Kompression der Riemenscheibe 2 im Crashfall zusätzlich unterstützt.

## Patentansprüche

1. Fahrzeug, mit
- einem Verbrennungsmotor, der so in das Fahrzeug eingebaut ist, dass sich eine Kurbelwelle des Verbrennungsmotors in einer Längsrichtung des Fahrzeugs erstreckt,
- einem Zugmittelantrieb, welcher ein um eine Längsachse des Fahrzeugs drehbar angeordnetes Rad (2), insbesondere eine Riemenscheibe, aufweist, das bzw. die in Fahrtrichtung des Fahrzeugs betrachtet, vorderhalb des Verbrennungsmotors angeordnet ist,
- das Rad (2) mindestens eine Schwächung (11a - 11e) aufweist, die bei einem Frontalcrash des Fahrzeugs eine Kompression des Rads (2) in Längsrichtung des Fahrzeugs ermöglicht bzw. erleichtert, **dadurch gekennzeichnet, dass**
• das Rad (2) in Umfangsrichtung des Rads (2) voneinander beabstandete Schwächungen (11a - 11e) aufweist, wobei die Schwächungen (11a - 11e) durch Schlitze gebildet sind,
• die Schlitze (11a - 11e) eine sich in Längsrichtung des Fahrzeugs erstreckende Länge aufweisen, die größer ist als eine sich in Umfangsrichtung des Rads (2) erstreckende Breite.

2. Fahrzeug nach Anspruch 1, **dadurch gekennzeichnet, dass** es sich bei dem Rad um ein lasergesintertes Bauteil handelt.

3. Fahrzeug nach Anspruch 1 oder 2, **dadurch gekennzeichnet, dass** das Rad (2) an einer Schwungscheibe (1) des Verbrennungsmotors befestigt, insbesondere angeschraubt, ist.

4. Fahrzeug nach Anspruch 3, **dadurch gekennzeichnet, dass** die Schwungscheibe (1) eine kreisförmige, nutartige Vertiefung (10) aufweist, in die bei einem Frontalcrash des Fahrzeugs sich ein Umfangs- bzw. Mantelabschnitt (4) des Rads (2) hinein verformen kann.

5. Fahrzeug nach einem der Ansprüche 1 bis 4, **dadurch gekennzeichnet, dass** ein Spaltelement (13) vorgesehen ist, welches bei einem Frontalcrash den Umfang- bzw. Mantelabschnitt (4) des Rads (2) in Längsrichtung des Fahrzeugs an mindestens einer Stelle des Umfangs bzw. des Mantelabschnitts (4) spaltet.

6. Fahrzeug nach Anspruch 5, **dadurch gekennzeichnet, dass** das Spaltelement (13) in einer Seitenansicht betrachtet, pilzartig gestaltet ist, wobei ein Schaftabschnitt (13a) des Spaltelements (13) sich konzentrisch zu einer Drehachse des Rads erstreckt und an einer dem Rad (2) zugewandten Unterseite eines Kopfabschnitts (13b) des Spaltelements (13) mindestens ein schneidenartiges Element (13) vorgesehen ist, das bei einem Frontalcrash in den Umfangs-bzw. Mantelabschnitt (4) des Rads (2) eindringt.

## Claims

1. A vehicle, having
- an internal combustion engine which is installed in the vehicle such that a crankshaft of the internal combustion engine extends in a longitudinal direction of the vehicle,
- a flexible drive which has a wheel (2), especially a pulley, arranged rotatably about a longitudinal axis of the vehicle, which wheel or pulley, viewed in the direction of travel of the vehicle, is arranged in front of the internal combustion engine,
- the wheel (2) has at least one weakened portion (11a - 11e) which in the event of a front-end impact of the vehicle permits or facilitates compression of the wheel (2) in the longitudinal direction of the vehicle,
**characterised in that**
• the wheel (2) has weakened portions (11a - 11e) which are spaced apart from each other in the peripheral direction of the wheel (2), the weakened portions (11a - 11e) being formed by slots,
• the slots (11a - 11e) have a length extending in the longitudinal direction of the vehicle which is greater than a width extending in the peripheral direction of the wheel (2).

2. A vehicle according to Claim 1, **characterised in that** the wheel is a laser-sintered component.

3. A vehicle according to Claim 1 or Claim 2, **characterised in that** the wheel (2) is fastened, especially screwed, to a flywheel (1) of the internal combustion engine.

4. A vehicle according to Claim 3, **characterised in that** the flywheel (1) has a circular, groove-like depression (10) into which in the event of a front-end impact of the vehicle a peripheral or lateral surface portion (4) of the wheel (2) can be deformed.

5. A vehicle according to one of Claims 1 to 4, **characterised in that** a splitting element (13) is provided which in the event of a front-end impact splits the peripheral or lateral surface portion (4) of the wheel (2) in the longitudinal direction of the vehicle at at least one point on the periphery or the lateral surface portion (4).

6. A vehicle according to Claim 5, **characterised in that** the splitting element (13), viewed from the side, is mushroom-shaped, with a shank portion (13a) of the splitting element (13) extending concentrically to an axis of rotation of the wheel and at least one cutting-edge-like element (13) is provided on an underside, facing the wheel (2), of a head portion (13b) of the splitting element (13), which cutting-edge-like element in the event of a front-end impact penetrates into the peripheral or lateral surface portion (4) of the wheel (2).

## Revendications

1. Véhicule comprenant :
- un moteur à combustion interne qui est monté dans le véhicule de sorte que le vilebrequin de ce moteur s'étende dans la direction longitudinale du véhicule,
- un entraînement à moyen de traction qui comporte une roue (2) en particulier une poulie montée mobile en rotation autour de l'axe longitudinal du véhicule, et qui, considéré dans la direction de déplacement du véhicule est situé à l'avant du moteur à combustion interne,
- la roue (2) comportant au moins une zone d'affaiblissement (11a - 11e) qui, en cas de choc frontal du véhicule permet ou facilite une compression de la roue (2) dans la direction longitudinale du véhicule,
**caractérisé en ce que**
- la roue (2) comporte des zones d'affaiblissement (11a - 11e) situées à distance les unes des autres dans sa direction périphérique de celle-ci, les zones d'affaiblissement (11a - 11e) étant formées par des fentes,
- les fentes (11a - 11e) ont une longueur dans la direction longitudinale du véhicule qui est supérieure à la largeur dans la direction périphérique de la roue (2).

2. Véhicule conforme à la revendication 2,
**caractérisé en ce que**
la roue et une pièce frittée au laser.

3. Véhicule conforme à la revendication 1 ou 2,
**caractérisé en ce que**
la roue (2) est fixée en particulier vissée sur un disque volant (1) du véhicule.

4. Véhicule conforme à la revendications 3,
**caractérisé en ce que**
le disque volant (1) comporte une cavité circulaire (10) en forme de rainure dans laquelle, en cas de choc frontal du véhicule, un segment périphérique ou un segment enveloppe (4) de la roue (2) peut se déformer.

5. Véhicule conforme à l'une des revendications 1 à 4,
**caractérisé en ce qu'**
il est prévu un élément de clivage (13) qui, en cas de choc frontal, fend, le segment périphérique ou le segment enveloppe (4) de la roue (2) dans la direction longitudinale du véhicule au niveau d'au moins un emplacement de ce segment.

6. Véhicule conforme à la revendication 5,
**caractérisé en ce que**
considéré en vue latérale, l'élément de clivage (13) est réalisé en forme de champignon, le segment de tige (13a) de cet élément de clivage (13) s'étendant concentriquement à l'axe de rotation de la roue, et, il est prévu, sur la face inférieure tournée vers la roue (2) de la partie de tête (13b) de l'élément de clivage (13), au moins un élément en forme de lame (13) qui, lors d'un choc frontal pénètre dans le segment périphérique ou le segment enveloppe (4) de la roue (2).
